# EUROPEAN PATENT APPLICATION

(11) **EP 4 782 708 A1**
(43) Date of publication of application: **29.07.2026**
(21) Application number: 26153094.3
(22) Date of filing: 21.01.2026
(51) Int. Cl.: F16B 21/09, F21V 11/18, F21V 17/16

(54) **LOCKING STRUCTURE AND LUMINAIRE**

(30) Priority: 24.01.2025 CN 202510123414
(71) Applicant: Astera Manufacturing Limited, Shenzhen, Guangdong 518000 (CN)
(72) Inventor: ERNST, Norbert, Hong Kong (CN); CANINS, Simon, Munich (DE)
(74) Representative: Bandpay & Greuter

(57) **Abstract**

A locking structure includes a snap-fit assembly and a connector. The snap-fit assembly includes a mounting seat, a snap-fit member, and an elastic reset member. The mounting seat defines an accommodating cavity and a first opening extending through a side wall of the mounting seat in a first direction and communicated with the accommodating cavity. The mounting seat is configured to connect a fastened body. The snap-fit member is slidably mounted in the accommodating cavity. The snap-fit member includes a snap-fit portion opposite to the first opening. The elastic reset member is connected between the mounting seat and the snap-fit member, and configured to provide the snap-fit portion with an elastic force against the first opening. The connector includes a clamping portion and a connecting portion, the clamping portion is connected to the connecting portion, and the connecting portion is configured to connect a fastening body.

## Description

### TECHNICAL FIELD

The present disclosure relates to the technical field of snap-fit connections, and in particular, to a locking structure and a luminaire.

### BACKGROUND

Typically, a barn door is arranged on a luminaire body, and the barn door surrounds the periphery of the luminaire body. In related technologies, the barn door is detachably connected to the luminaire body to facilitate the assembly or disassembly of the barn door and the luminaire body. However, no anti-fall structure is provided between the barn door and the luminaire body. During the assembly and disassembly of the barn door and the luminaire body, the barn door, as an independent component, is prone to accidentally falling during operation, resulting in damage to the barn door.

### SUMMARY

The present disclosure aims to solve at least one of the technical problems in the existing technologies. To this end, the present disclosure proposes a locking structure and a luminaire that can provide anti-fall protection for a barn door on a luminaire body.

In a first aspect, an embodiment of the present disclosure provides a locking structure for connection between a fastened body and a fastening body, which includes:
a snap-fit assembly including a mounting seat, a snap-fit member, and an elastic reset member; wherein the mounting seat defines an accommodating cavity and a first opening, the first opening extends through a side wall of the mounting seat in a first direction and is in communication with the accommodating cavity, and the mounting seat is configured to connect the fastened body; the snap-fit member is slidably mounted in the accommodating cavity in the first direction, and the snap-fit member is able to slide between a first position and a second position in the first direction; the snap-fit member includes a snap-fit portion, and the snap-fit portion is opposite to the first opening in the first direction; the elastic reset member is connected between the mounting seat and the snap-fit member, and the elastic reset member is configured to provide the snap-fit portion with an elastic force against the first opening; and
a connector including a clamping portion and a connecting portion, wherein the clamping portion is connected to the connecting portion, and the connecting portion is configured to connect the fastening body;
wherein when the snap-fit member is in the first position, the snap-fit portion is away from the first opening, and the clamping portion is able to be inserted into the accommodating cavity through the first opening; when the snap-fit member is in the second position, the snap-fit portion is adjacent to the first opening and restricts the clamping portion to separate from the accommodating cavity through the first opening.

The locking structure according to the embodiments of the present disclosure has at least the following beneficial effects.

By providing the snap-fit member and the elastic reset member, a passage gap with a certain size may be formed between the snap-fit portion and the first opening when the elastic force of the elastic reset member is overcome by an external force and the snap-fit member is enabled to slide to the first position where its snap-fit portion is located away from the first opening in the first direction. The clamping portion of the connector can be inserted into the accommodating cavity through the first opening and this passage gap. After the external force is removed and when the snap-fit member slides to the second position where its snap-fit portion is located adjacent to the first opening in the first direction under the elastic action of the elastic reset member, the snap-fit portion blocks the passage gap, thus preventing the clamping portion from separating from the accommodating cavity through the passage gap and the first opening. The elastic reset member can enable the snap-fit member to remain in the second position, such that the clamping portion is clamped in the accommodating cavity, the connector is locked in the snap-fit assembly and the clamping portion cannot be removed from the accommodating cavity. In this way, the fastened body (luminaire body) and the fastening body (barn door) are securely connected through the snap-fit assembly and the connector. The locking structure can provide anti-fall protection for the fastening body (barn door) on the fastened body (luminaire body), thus preventing the fastening body (barn door) from accidentally falling off the fastened body (luminaire body) and being damaged during disassembly and assembly.

According to some embodiments of the present disclosure, when the snap-fit member is in the first position, a minimum distance between the snap-fit portion and the first opening is greater than or equal to a height of the clamping portion; and
when the snap-fit member is in the second position, a minimum distance between the snap-fit portion and the first opening is less than a height of the clamping portion.

According to some embodiments of the present disclosure, the mounting seat further defines a second opening, the second opening extends through the side wall of the mounting seat in the first direction and is in communication with the accommodating cavity, the second opening is connected to the first opening, and the second opening extends in a second direction, the second opening is configured to allow the connecting portion to move when the snap-fit member is in the first position, to drive the clamping portion to move in the second direction and separate from one side of the snap-fit portion facing the accommodating cavity, and the first direction is perpendicular to the second direction.

According to some embodiments of the present disclosure, a diameter of the first opening is greater than or equal to a maximum diameter of the clamping portion, and a width of the second opening is greater than or equal to a diameter of the connecting portion and less than the maximum diameter of the clamping portion.

According to some embodiments of the present disclosure, the snap-fit member is provided with a first guide surface facing the first opening, the first guide surface extends gradually away from the first opening in a direction from the first opening to the second opening, and the first guide surface is configured to abut against the clamping portion and guide the clamping portion to move to one side of the second opening facing the accommodating cavity.

According to some embodiments of the present disclosure, the clamping portion is provided with an abutting surface, the abutting surface is located at one end of the clamping portion away from the connecting portion, the abutting surface extends gradually away from the connecting portion in a direction from the clamping portion to the connecting portion, and the abutting surface is configured to abut against the first guide surface.

According to some embodiments of the present disclosure, the first opening and the second opening are located at a bottom of the mounting seat, a second guide surface is provided on an inner surface of the side wall facing the accommodating cavity, the second guide surface is provided along an edge of the second opening, and the second guide surface extends gradually away from the accommodating cavity in a direction from the second opening to the first opening.

According to some embodiments of the present disclosure, the snap-fit assembly further includes a push-assisting mechanism; the push-assisting mechanism is arranged in the accommodating cavity, and the push-assisting mechanism is configured to push the clamping portion to the first opening when the snap-fit member is in the first position.

According to some embodiments of the present disclosure, the push-assisting mechanism includes a pushing member and an elastic push-assisting member; the pushing member is slidably mounted in the accommodating cavity in the second direction, the elastic push-assisting member is connected between the pushing member and the mounting seat, the elastic push-assisting member is configured to provide the pushing member with an elastic force against the clamping portion, and the first direction is perpendicular to the second direction.

According to some embodiments of the present disclosure, the snap-fit member further includes a pressing portion, the pressing portion is connected to the snap-fit portion;
wherein the mounting seat further defines a third opening, the third opening extends through the side wall of the mounting seat in the first direction and is in communication with the accommodating cavity, and the pressing portion is inserted through the third opening.

According to some embodiments of the present disclosure, the mounting seat further defines a storage cavity, the storage cavity is in communication with the accommodating cavity, and the storage cavity is located on one side of the snap-fit member facing away from the first opening.

According to some embodiments of the present disclosure, the mounting seat includes a seat body and a cover plate; the cover plate is detachably connected to the seat body, the seat body and the cover plate cooperatively define the accommodating cavity, the accommodating cavity is defined in the seat body, and the first opening is defined in the cover plate.

In a second aspect, embodiments of the present disclosure further provide a luminaire, including a luminaire body, a barn door, and the above-mentioned locking structure, where the barn door is detachably connected to the luminaire body, the mounting seat is connected to the luminaire body, and the connecting portion is connected to the barn door.

The luminaire of the present disclosure has the same beneficial effects as the locking structure, which will not be elaborated here.

Additional aspects and advantages of the present disclosure will be set forth in part in the description which follows, and in part will be obvious from the description, or may be learned by practice of the present disclosure.

### BRIEF DESCRIPTION OF DRAWINGS

The present disclosure will be further described below with reference to the accompanying drawings and embodiments, in which:
FIG. 1 is a structural side view of a luminaire provided in an embodiment of the present disclosure;
FIG. 2 is an exploded structural view of a locking structure shown in FIG. 1;
FIG. 3 is a structural sectional view of a snap-fit assembly of a locking structure shown in FIG. 2;
FIG. 4 is a state view illustrating cooperation between a snap-fit assembly and a connector of a locking structure shown in FIG. 2, wherein a snap-fit member of the snap-fit assembly is located in a first position;
FIG. 5 is another state view illustrating cooperation between a snap-fit assembly and a connector of a locking structure shown in FIG. 2, wherein a snap-fit member of the snap-fit assembly is located in a second position;
FIG. 6 is a schematic structural view of a locking structure provided in another embodiment of the present disclosure; and
FIG. 7 is a structural front view of a luminaire shown in FIG. 1.

### Reference numerals:

luminaire 1000;
locking structure 100; snap-fit assembly 10; mounting seat 11; seat body 111; cover plate 112; second guide surface 1101; accommodating cavity 101; first opening 102; passage gap 103; second opening 104; guide section 105; third opening 106; storage cavity 107; limiting slot 108; snap-fit member 12; snap-fit portion 121; pressing portion 122; first guide surface 1201; accommodating cavity 1202; elastic reset member 13; push-assisting mechanism 14; pushing member 141; elastic push-assisting member 142; connector 20; clamping portion 21; abutting surface 2101; connecting portion 22;
luminaire body 200;
barn door 300; connecting seat 30; first light-shielding plate 40; second light-shielding plate 50;
first direction Y; second direction X.

### DETAILED DESCRIPTION

Embodiments of the present disclosure will be described in detail below. Examples of the embodiments are illustrated in the accompanying drawings, where the same or like reference numerals throughout the figures indicate the same or like elements having the same or like functions. The embodiments described below with reference to the accompanying drawings are exemplary and are intended only to explain the present disclosure instead of being construed as limiting the present disclosure.

In the description of the present disclosure, it should be understood that, descriptions relating to orientation, for example, orientation or positional relationships indicated by "up", "down", "front", "rear", "left", "right", etc. are based on the orientation or positional relationships shown in the accompanying drawings, and are to facilitate the description of the present disclosure and simplify the description only, rather than indicating or implying that the device or element referred to must have a specific orientation or be constructed and operated in a specific orientation, and therefore cannot be construed as limiting the present disclosure.

In the description of the present disclosure, the meaning of "several" is one or more, the meaning of "a plurality of" is two or more, "greater than", "less than", "more than", etc. are to be understood to exclude the given figure, and "above", "below", "within", etc. are understood to include the given figure. If "first" and "second", etc. are referred to, it is only for the purpose of distinguishing technical features, and shall not be understood as indicating or implying relative importance or implying the number of the indicated technical features or implying the sequence of the indicated technical features.

In the description of the present disclosure, unless otherwise explicitly defined, the words such as "set", "install", and "connect" should be understood in a broad sense, and those of ordinary skill in the art can determine the specific meanings of the above words in the present disclosure in a rational way in combination with the specific contents of the technical solutions.

In the description of the disclosure, reference to the terms such as "an embodiment", "some embodiments", "exemplary embodiment", "example", " specific example" and "some examples" means that a particular feature, structure, material, or characteristic described in connection with the embodiment or example is included in at least one embodiment or example of the present invention. In this specification, the schematic representations of the terms above do not necessarily refer to the same embodiment or example. Furthermore, the particular feature, structure, material, or characteristic described may be combined in any suitable manner in any one or more embodiments or examples.

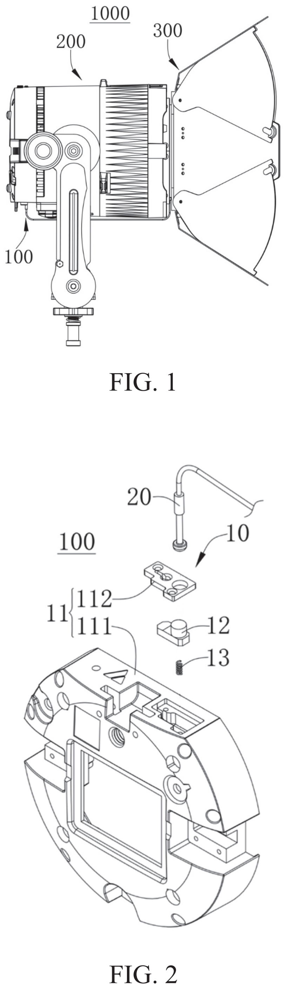

Referring to FIG. 1, embodiments of the present disclosure provide a locking structure 100. The locking structure 100 is configured to connect a fastened body and a fastening body. The fastened body may be a luminaire body 200, and the fastening body may be a barn door 300.

In combination with FIGS. 2 to 5, the locking structure 100 includes a snap-fit assembly 10 and a connector 20. The snap-fit assembly 10 includes a mounting seat 11, a snap-fit member 12, and an elastic reset member 13. The mounting seat 11 defines an accommodating cavity 101 and a first opening 102, the first opening 102 extends through a side wall of the mounting seat 11 in a first direction Y and is in communication with the accommodating cavity 101, and the mounting seat 11 is configured to connect the fastened body. The snap-fit member 12 is slidably mounted in the accommodating cavity 101 in the first direction Y, and the snap-fit member 12 is able to slide between a first position and a second position in the first direction Y. The snap-fit member 12 includes a snap-fit portion 121, and the snap-fit portion 121 is opposite to the first opening 102 in the first direction Y. The elastic reset member 13 is connected between the mounting seat 11 and the snap-fit member 12, and the elastic reset member 13 is configured to provide the snap-fit portion 121 with an elastic force against the first opening 102.

The connector 20 includes a clamping portion 21 and a connecting portion 22. The clamping portion 21 is connected to the connecting portion 22, and the connecting portion 22 is configured to connect the fastening body.

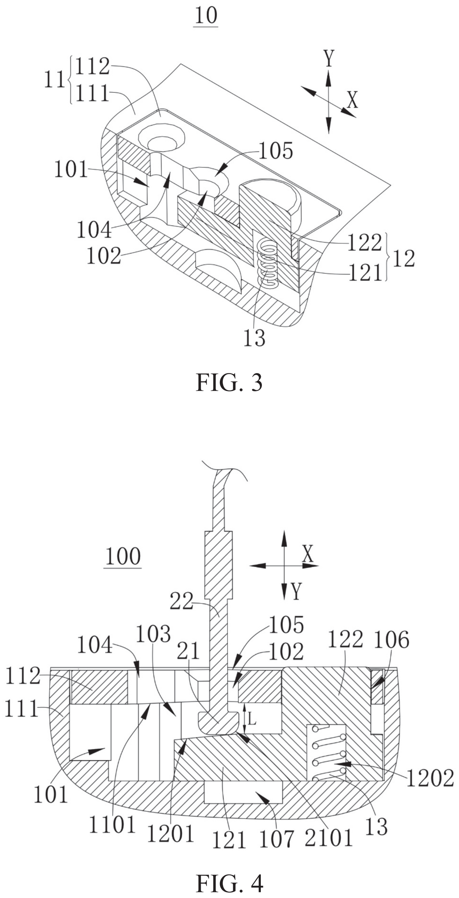

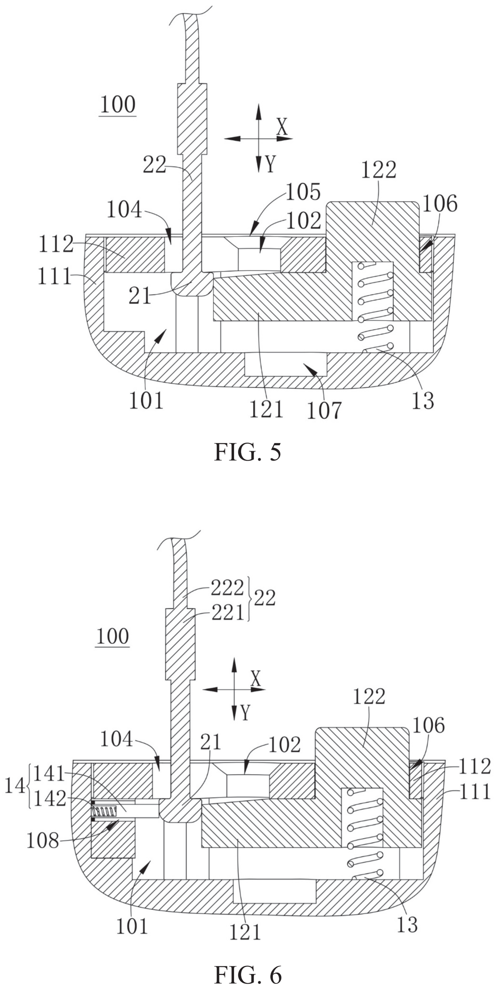

As shown in FIG. 4, when the snap-fit member 12 is in the first position, the snap-fit portion 121 is away from the first opening 102, and the clamping portion 21 is able to be inserted into the accommodating cavity 101 through the first opening 102. As shown in FIG. 5, when the snap-fit member 12 is in the second position, the snap-fit portion 121 is adjacent to the first opening 102 and restricts the clamping portion 21 to separate from the accommodating cavity 101 through the first opening 102.

In embodiments of the present disclosure, by providing the snap-fit member 12 and the elastic reset member 13, a passage gap 103 with a certain size may be formed between the snap-fit portion 121 and the first opening 102 when the elastic force of the elastic reset member 13 is overcome by an external force and the snap-fit member 12 is enabled to slide to the first position where its snap-fit portion 121 is located away from the first opening 102 in the first direction Y. The clamping portion 21 of the connector 20 may be inserted into the accommodating cavity 101 through the first opening 102 and this passage gap 103. After the external force is removed and when the snap-fit member 12 slides to the second position where its snap-fit portion 121 is located adjacent to the first opening 102 in the first direction Y under the elastic action of the elastic reset member 13, the snap-fit portion 121 partially or completely blocks the passage gap 103, thus restricting the clamping portion 21 to separate from the accommodating cavity 101 through the passage gap 103 and the first opening 102. The elastic reset member 13 may enable the snap-fit member 12 to remain in the second position, such that the clamping portion 21 is clamped in the accommodating cavity 101, the clamping portion 21 cannot be removed from the accommodating cavity 101 and the connector 20 is locked in the snap-fit assembly 10. In this way, the fastened body (luminaire body 200) and the fastening body (barn door 300) are securely connected through the snap-fit assembly 10 and the connector 20. The locking structure 100 may provide anti-fall protection for the fastening body (barn door 300) on the fastened body (luminaire body 200), thus preventing the fastening body (barn door 300) from accidentally falling off the fastened body (luminaire body 200) and being damaged during disassembly and assembly, with a sample structure and convenient operation.

During installation, the clamping portion 21 of the connector 20 connected to the fastening body (barn door 300) may be first clamped into the accommodating cavity 101 of the snap-fit assembly 10 connected to the fastened body (luminaire body 200), and then the fastening body (barn door 300) is mounted on the fastened body (luminaire body 200). During disassembly, the fastening body (barn door 300) may be first removed from the fastened body (luminaire body 200). At this time, the fastening body (barn door 300) is still connected to the fastened body (luminaire body 200) through the locking structure 100. Then, the clamping action of the snap-fit member 12 of the snap-fit assembly 10 on the clamping portion 21 of the connector 20 is released, thereby completely releasing the connection between the fastening body (barn door 300) and the fastened body (luminaire body 200). During the assembly and disassembly of the fastened body (luminaire body 200) and the fastening body (barn door 300), the locking structure 100 provides anti-fall protection throughout the process.

It should be noted that the above-mentioned snap-fit portion 121 being opposite to the first opening 102 in the first direction Y means that on a projection plane perpendicular to the first direction Y, the projection of the snap-fit portion 121 is at least partially overlapped with the projection of the first opening 102, which may be that the projection of the first opening 102 is located within the projection of the snap-fit portion 121, or the projection of the snap-fit portion 121 intersects with the projection of the first opening 102. It is only required that, when the snap-fit member 12 is in the second position, the part of the snap-fit portion 121 opposite to the first opening 102 can restrict the clamping portion 21 from exiting the accommodating cavity 101 through the first opening 102.

As shown in FIGS. 4 and 5, in some embodiments, when the snap-fit member 12 is in the first position, a minimum distance L between the snap-fit portion 121 and the first opening 102 is greater than or equal to a height of the clamping portion 21, that is, a height of the passage gap 103 formed between the snap-fit portion 121 and the first opening 102 is greater than or equal to the height of the clamping portion 21, such that the clamping portion 21 may pass through the passage gap 103 between the snap-fit portion 121 and the first opening 102. When the snap-fit member 12 is in the second position, a minimum distance L between the clamping portion 21 and the first opening 102 is less than a height of the clamping portion 21, that is, the snap-fit portion 121 partially or completely blocks the passage gap 103, to restrict the clamping portion 21 from separating from the accommodating cavity 101 through the passage gap 103 and the first opening 102.

As shown in FIGS. 4 and 5, a height direction of the clamping portion 21 is parallel to the first direction Y.

As shown in FIGS. 3 to 5, in some embodiments, the mounting seat 11 further defines a second opening 104. The second opening 104 extends through the side wall of the mounting seat 11 in the first direction Y and is in communication with the accommodating cavity 101, the second opening 104 is connected to the first opening 102, and the second opening 104 extends in a second direction X. The second opening 104 is configured to allow the connecting portion 22 to move in the second direction X when the snap-fit member 12 is in the first position, to drive the clamping portion 21 to move to one side of the snap-fit portion 121 away from the first opening 102 in the second direction X, and the first direction Y is perpendicular to the second direction X. Through the above arrangement, after the clamping portion 21 passes through the first opening 102, the user may drag the connecting portion 22 in the second direction X (specifically, the direction from the first opening 102 to the second opening 104), such that the clamping portion 21 moves in the second direction X (specifically, the direction from the first opening 102 to the second opening 104) to one side of the snap-fit portion 121 away from the first opening 102 in the second direction X, to separate from one side of the snap-fit portion 121 facing the first opening 102 and be clamped in the accommodating cavity 101, thereby completing the locking cooperation of the connector 20 and the snap-fit assembly 10. When the locking cooperation needs to be released, the snap-fit member 12 needs to move to the first position again and then the connecting portion 22 is dragged in a direction opposite to the second direction X (specifically, the direction from the second opening 104 to the first opening 102), such that the clamping portion 21 moves to the first opening 102 in the direction opposite to the second direction X (specifically, the direction from the second opening 104 to the first opening 102) and is then pulled out, which facilitates the locking cooperation or releasing of the locking cooperation between the connector 20 and the snap-fit assembly 10. Furthermore, by providing the second opening 104 for the connecting portion 22 to move in the second direction X, the connecting portion 22 can be prevented from being clamped between the snap-fit portion 121 and an end face of the first opening 102 facing the accommodating cavity 101.

It is worth noting that in the existing technology, the snap-fit member is actually slidably mounted in the accommodating cavity in the second direction X, while the clamping portion of the connector usually needs to be provided with a clamping slot. When the snap-fit member moves in the second direction X to a position away from the first opening, the clamping portion may enter the accommodating cavity through the first opening in the first direction Y. At this time, the clamping slot of the connector is opposite to the snap-fit portion of the snap-fit member in the second direction X. The snap-fit member then moves and resets in the second direction X under the elastic action of the elastic reset member and causes its snap-fit portion to be inserted into the clamping slot of the connector, to restrict the snap-fit portion to move in the first direction and separate from the accommodating cavity. In this process, the moving direction of the snap-fit member is always perpendicular to the moving direction of the clamping portion. However, in the locking structure 100 of the present disclosure, the snap-fit member 12 moves in the first direction Y until its snap-fit portion 121 is away from the first opening 102, to form the passage gap 103 between the snap-fit portion 121 and the first opening 102. Then, the clamping portion 21 first enters the accommodating cavity 101 through the first opening 102 in the first direction Y. In this process, the moving direction of the snap-fit member 12 is parallel to the moving direction of the clamping portion 21. Subsequently, the clamping portion 21 moves in the second direction X to one side of the snap-fit portion 121 away from the first opening 102 in the second direction X through the passage gap 103. The snap-fit member 12 then moves in the first direction Y under the elastic action of the elastic reset member 13 to the second position where its snap-fit portion 121 is located adjacent to the first opening 102, to partially or completely block the passage gap 103. At this time, the snap-fit portion 121 may restrict the clamping portion 21 to move in the second direction X to the first opening 102, to restrict the clamping portion 21 from separating from the accommodating cavity 101. In this process, the moving direction of the snap-fit member 12 is perpendicular to the moving direction of the clamping portion 21. That is to say, the locking structure 100 of the present disclosure enables the snap-fit member 12 and the clamping portion 21 to move in different directions, such that the snap-fit member 12 is staggered from the clamping portion 21, and the limiting of the clamping portion 21 is achieved, thus completing the locking cooperation between the connector 20 and the snap-fit assembly 10. A cooperation structure for mutual insertion is not necessary between the snap-fit member 12 and the clamping portion 21.

As shown in FIGS. 4 and 5, in some embodiments, the first opening 102 is cylindrical, the clamping portion 21 and the connecting portion 22 are in a spiral shape, and the second opening 104 is elongated. A diameter of the first opening 102 is greater than or equal to a maximum diameter of the clamping portion 21, such that the clamping portion 21 may pass through the first opening 102 in the first direction Y. A width of the second opening 104 is greater than or equal to a diameter of the connecting portion 22 and less than the maximum diameter of the clamping portion 21, such that the connecting portion 22 may pass through the second opening 104 in the second direction X, and the second opening 104 may restrict the clamping portion 21 to separate from the accommodating cavity 101 in the first direction Y.

As shown in FIGS. 4 and 5, the width direction of the second opening 104 is perpendicular to the first direction Y and the second direction X, that is, in FIGS. 4 and 5, the width direction of the second opening 104 is perpendicular to the paper facing inward or outward.

As shown in FIGS. 3 to 5, in some embodiments, a guide section 105 is provided at one end of the first opening 102 away from the accommodating cavity 101. The guide section 105 is in communication with the first opening 102, and a width of the guide section 105 gradually increases in a direction away from the accommodating cavity 101. The guide section 105 is configured to guide the clamping portion 21 to be inserted into the first opening 102. In this way, when the clamping portion 21 needs to be inserted into the first opening 102, it is only necessary to make the clamping portion 21 fall into the opening range formed by the guide section 105, and the clamping portion 21 is inserted into the first opening 102 under the guidance of the guide section 105 without precisely aligning the first opening 102, which is convenient for operation.

In some embodiments, the guide section 105 is funnel-shaped.

As shown in FIGS. 4 and 5, in some embodiments, the snap-fit portion 121 is provided with a first guide surface 1201 facing the first opening 102, the first guide surface 1201 extends gradually away from the first opening 102 in the direction from the first opening 102 to the second opening 104, and the first guide surface 1201 is configured to abut against the clamping portion 21 and guide the clamping portion 21 to move to one side of the snap-fit portion 121 away from the first opening 102 in the second direction X. In this way, when the clamping portion 21 passes through the first opening 102 and abuts against the first guide surface 1201, the elastic force provided by the elastic reset member 13 to the snap-fit member 12 against the first opening 102 will generate a component force to the clamping portion 21 in a direction from the first opening 102 to the second opening 104 on the first guide surface 1201, such that the clamping portion 21 may be pushed by the snap-fit member 12 along the first guide surface 1201 to one side of the snap-fit portion 121 away from the first opening 102 in the second direction X, thereby facilitating the locking cooperation between the connector 20 and the snap-fit assembly 10 and improving the convenience of use.

Specifically, during operation, the user only needs to insert the clamping portion 21 into one side of the first opening 102 facing the accommodating cavity 101 through the first opening 102, and in the passage gap 103 formed between the snap-fit portion 121 and the first opening 102, the clamping portion 21 is allowed to move a small distance in the direction from the first opening 102 to the second opening 104, such that the clamping portion 21 is clamped by the first guide surface 1201 and an end face of the first opening 102 facing the accommodating cavity 101. The clamping portion 21 may then be pushed by the snap-fit member 12 to one side of the snap-fit portion 121 away from the first opening 102 in the second direction X under the elastic action of the elastic reset member 13.

To enable the first guide surface 1201 to push the clamping portion 21 in the direction from the first opening 102 to the second opening 104 by sufficient distance, in some embodiments, the first guide surface 1201 extends to one side opposite to the second opening 104 in the direction from the first opening 102 to the second opening 104. That is, a part of the first guide surface 1201 is disposed opposite to the first opening 102, and another part of the first guide surface 1201 is disposed opposite to the second opening 104. In this way, it may be ensured that the first guide surface 1201 may push the clamping portion 21 by sufficient distance, such that the clamping portion 21 is pushed to one end of the second opening 104 away from the first opening 102.

In some embodiments, the first guide surface 1201 may be an inclined plane or an arc surface.

As shown in FIGS. 4 and 5, in some embodiments, the clamping portion 21 is provided with an abutting surface 2101. The abutting surface 2101 is located at one end of the clamping portion 21 away from the connecting portion 22, the abutting surface 2101 extends gradually away from the connecting portion 22 in the direction from the clamping portion 21 to the connecting portion 22, and the abutting surface 2101 is configured to abut against the first guide surface 1201. When the clamping portion 21 abuts against the first guide surface 1201, providing the abutting surface 2101 on the clamping portion 21 helps to generate relative sliding between the abutting surface 2101 and the first guide surface 1201, such that the snap-fit member 12 easily pushes the clamping portion 21 to move to one side of the snap-fit portion 121 away from the first opening 102 in the second direction X, thereby further facilitating the snap-fit connection with the connector 20 and improving the convenience of use.

In some embodiments, the abutting surface 2101 may be an inclined plane or an arc surface.

In some embodiments, the clamping portion 21 is spherical, and the abutting surface 2101 is a spherical surface.

As shown in FIGS. 4 and 5, in some embodiments, the first opening 102 and the second opening 104 are located at a bottom of the mounting seat 11, a second guide surface 1101 is provided on an inner surface of the side wall (that is, the side wall of the mounting seat 11 where the first opening 102 and the second opening 104 are located) facing the accommodating cavity 101, the second guide surface 1101 is provided along an edge of the second opening 104, and the second guide surface 1101 extends gradually away from the accommodating cavity 101 in the direction from the second opening 104 to the first opening 102. By flipping the structure shown in FIGS. 4 and 5 by 90 degrees in a direction parallel to the paper plane, the first opening 102 and the second opening 104 are located at the bottom of the mounting seat 11. By providing the second guide surface 1101, when the snap-fit member 12 slides to the first position where its snap-fit portion 121 is located away from the first opening 102 in the first direction Y, the clamping portion 21 generates a component force (the acting direction of the component force is obliquely downward) on the second guide surface 1101 along the second guide surface 1101 under its own gravity, such that the clamping portion 21 may naturally pass through the passage gap 103 formed between the snap-fit portion 121 and the first opening 102 along the second guide surface 1101, move from one side of the second opening 104 facing the accommodating cavity 101 to one side of the first opening 102 facing the accommodating cavity 101, and fall out of the accommodating cavity 101 at the first opening 102, thereby facilitating the release of the snap-fit between the connector 20 and the snap-fit assembly 10 and further improving the convenience of use.

The second guide surface 1101 may be an inclined plane or an arc surface.

Of course, it should be appreciated that in some other embodiments, the first opening 102 and the second opening 104 may also be located on the side of the mounting seat 11 (by flipping the structure shown in FIGS. 4 and 5 by 90 degrees in a direction perpendicular to the paper plane, the first opening 102 and the second opening 104 are located on the side of the mounting seat 11) or on the top of the mounting seat 11 (as shown in FIGS. 4 and 5, the first opening 102 and the second opening 104 are located on the top of the mounting seat 11), and are not limited to the bottom of the mounting seat 11.

As shown in FIGS. 4 and 5, in some embodiments, the snap-fit member 12 further includes a pressing portion 122. The pressing portion 122 is connected to the snap-fit portion 121. The mounting seat 11 further defines a third opening 106. The third opening 106 extends through the side wall of the mounting seat 11 in the first direction Y and is in communication with the accommodating cavity 101. The pressing portion 122 is inserted through the third opening 106. By the above arrangement, the user may press the pressing portion 122, causing the pressing portion 122 to retract into the accommodating cavity 101 and drive the snap-fit portion 121 to move away from the first opening 102 in the first direction Y, such that the passage gap 103 through which the clamping portion 21 may pass is formed between the snap-fit portion 121 and the first opening 102. After the user releases the pressing portion 122, the connector 20 may be reset under the elastic action of the elastic reset member 13, which further improves the convenience of use.

In some embodiments, the third opening 106 is adapted to the pressing portion 122, such that an inner wall of the third opening 106 may serve to guide the pressing portion 122 to slide in the first direction Y, ensuring that the snap-fit portion 121 slides only in the first direction Y relative to the mounting seat 11 and is always opposite to the first opening 102 in the first direction Y, and preventing the snap-fit portion 121 from shifting in the sliding process.

In some embodiments, the snap-fit portion 121 and the pressing portion 122 are integrally formed to facilitate production and assembly into the accommodating cavity 101.

When the connector 20 needs to be locked to the snap-fit assembly 10, the user may hold the connector 22 with one hand and make the clamping portion 21 abut against the snap-fit portion 121 through the first opening 102, overcomes the elastic acting force of the elastic reset member 13 and enables the snap-fit portion 121 to move away from the first opening 102 in the first direction Y, such that the passage gap 103 is formed between the snap-fit portion 121 and the first opening 102. Then, the user may drag the connecting portion 22 in the second direction X to one end of the second opening 104 away from the first opening 102, such that the clamping portion 21 moves in the second direction X through the passage gap 103, to one side of the snap-fit portion 121 away from the first opening 102 in the second direction X. Subsequently, the snap-fit portion 121 is reset under the elastic action of the elastic reset member 13, and partially or completely blocks the passage gap 103, thereby completing the locking of the connector 20 by the snap-fit assembly 10. Alternatively, the user may press the pressing portion 122 with the middle finger of one hand, overcomes the elastic acting force of the elastic reset member 13, and enables the snap-fit portion 121 to move away from the first opening 102 in the first direction Y, such that the passage gap 103 is formed between the snap-fit portion 121 and the first opening 102. Then, the user holds the connecting portion 22 with the index finger and thumb of the same hand, causing the clamping portion 21 to be inserted into the first opening 102, then the user drags the connecting portion 22 to move to one end of the second opening 104 away from the first opening 102 in the second direction X, such that the clamping portion 21 moves to one side of the snap-fit portion 121 away from the first opening 102 in the second direction X through the passage gap 103. Subsequently, the pressing portion 122 is released, such that the snap-fit portion 121 is reset under the elastic action of the elastic reset member 13 and partially or completely blocks the passage gap 103, thereby completing the locking of the connector 20 by the snap-fit assembly 10. When the locking cooperation between the snap-fit assembly 10 and the connector 20 needs to be released, the user may press the pressing portion 122 with the middle finger of one hand, overcomes the elastic acting force of the elastic reset member 13, and enables the snap-fit portion 121 to move away from the first opening 102 in the first direction Y, such that the passage gap 103 is formed between the snap-fit portion 121 and the first opening 102. Then, the user may hook the connecting portion 22 with the thumb of the same hand and drag the connecting portion 22 to move to the first opening 102 in the second direction X, such that the clamping portion 21 may move to the first opening 102 through the passage gap 103 in the second direction X. Subsequently, the clamping portion 21 may be pulled out and the pressing portion 122 may be released, thereby completing the release of the locking cooperation between the snap-fit assembly 10 and the connector 20.

As shown in FIGS. 4 and 5, in some embodiments, the mounting seat 11 further defines a storage cavity 107. The storage cavity 107 is in communication with the accommodating cavity 101, and the storage cavity 107 is located on one side of the snap-fit member 12 facing away from the first opening 102. Through the above arrangement, the storage cavity 107 may collect and temporarily store dust and other impurities that enter the accommodating cavity 101, preventing dust and other impurities from accumulating on one side of the snap-fit member 12 facing away from the first opening 102 and hindering the snap-fit member 12 from sliding in the first direction Y.

It may be understood that when the snap-fit assembly 10 is in a state where the first opening 102 and the second opening 104 are located at the bottom of the mounting seat 11 and an opening of the storage cavity 107 is oriented downwards, even if the storage cavity 107 cannot collect and temporarily store dust and other impurities by using the gravity of dust and other impurities, the storage cavity 107 may still provide an avoidance space for dust and other impurities located on one side of the snap-fit member 12 facing away from the first opening 102, so as to avoid the dust and other impurities from interfering with the movement of the snap-fit member 12 on one side of the snap-fit member 12 facing away from the first opening 102 when the snap-fit member 12 slides to the first position in the first direction Y.

In addition, when the snap-fit assembly 10 is in the state where the first opening 102 and the second opening 104 are located on top of the mounting seat 11 and the opening of the storage cavity 107 is oriented upwards, dust and other impurities may fall into the storage cavity 107 due to their own gravity.

As shown in FIGS. 4 and 5, in some embodiments, the mounting seat 11 includes a seat body 111 and a cover plate 112. The cover plate 112 is detachably connected to the seat body 111, the seat body 111 and the cover plate 112 cooperatively define the accommodating cavity 101, and the first opening 102 is defined in the cover plate 112. Through the detachable connection of the cover plate 112 and the seat body 111, the cover plate 112 may be removed for maintenance, such as cleaning dust and other impurities from the accommodating cavity 101, and replacing parts (e.g., the snap-fit member 12, the elastic reset member13, the push-assisting mechanism 14), etc.

The above-mentioned second opening 104 is also defined on the cover plate 112.

It should be appreciated that the structural shape of the mounting seat 11 may be set according to actual needs. The structural shape of the mounting seat 11 is not limited in the present disclosure. The mounting seat 11 may be mounted on the luminaire body 200 as an independent component, or the mounting seat 11 may be integrated on the luminaire body 200 and serves as a part of the luminaire body 200.

As shown in FIGS. 4 and 5, in some embodiments, the snap-fit member 12 defines an accommodating cavity 1202. The elastic reset member 13 is partially contained within the accommodating cavity 1202. Through the above-mentioned arrangement, on the one hand, the accommodating cavity 1202 may limit the elastic reset member 13, to prevent the elastic reset member 13 from separating from the snap-fit member 12 or bending when compressed, and on the other hand, the part of the elastic reset member 13 that is exposed to the snap-fit member 12 may be reduced, which may reduce the impact of dust and other impurities on the performance of the elastic reset member 13 to a certain extent.

The accommodating cavity 1202 is defined within the pressing portion 122, such that when the pressing portion 122 is pressed, the axis of the elastic reset member 13 may be coaxial or approximately coaxial with the direction of the applied pressure.

In some embodiments, the elastic reset member 13 is a compression spring.

In some other embodiments, the elastic reset member 13 may also be other components capable of providing the snap-fit portion 121 with an elastic force against the first opening 102, such as a leaf spring.

Referring to FIG. 6, in some embodiments, the snap-fit assembly 10 further includes a push-assisting mechanism 14. The push-assisting mechanism 14 is arranged in the accommodating cavity 101, and the push-assisting mechanism 14 is configured to push the clamping portion 21 to the first opening 102 when the snap-fit member 12 is in the first position. In this way, the force required to drag the connecting portion 22 in the direction from the second opening 104 to the first opening 102 can be saved, which facilitates the release of the clamping action of the connector 20 by the snap-fit assembly 10 and further improves the convenience of use.

In some embodiments, the push-assisting mechanism 14 includes a pushing member 141 and an elastic push-assisting member 142. The pushing member 141 is slidably mounted in the accommodating cavity 101 in the second direction X. The pushing member 141 may slide in the direction from the second opening 104 to the first opening 102 to push the clamping portion 21 to the first opening 102. The pushing member 141 may also slide in the direction from the first opening 102 to the second opening 104 to reset. The elastic push-assisting member 142 is connected between the pushing member 141 and the mounting seat 11. The elastic push-assisting member 142 is configured to provide the pushing member 141 with an elastic force against the clamping portion 21.

In some embodiments, a limiting slot 108 is defined in the accommodating cavity 101, and the pushing member 141 is slidably mounted in the limiting slot 108 in the second direction X. The limiting slot 108 is configured to guide the pushing member 141 to slide in the second direction X and restrict the pushing member 141 to separate from the limiting slot 108 when the clamping portion 21 is pushed to the first opening 102.

In some embodiments, the elastic push-assisting member 142 is a compression spring.

In some other embodiments, the elastic push-assisting member 142 may also be other components capable of providing the pushing member 141 with an elastic force against the clamping portion 21, such as a leaf spring.

As shown in FIG. 6, in some embodiments, the connecting portion 22 includes a rod portion 221 and a rope portion 222. The rod portion 221 is connected between the clamping portion 21 and the rope portion 222. The end of the rope portion 222 away from the rod portion 221 is connected to the fastening body (barn door 300). The rope portion 222 has a certain degree of flexibility, which allows the connector 20 to bend and deform to a certain extent and wrap around the fastened body (luminaire body 200), facilitating the connection of the fastened body (luminaire body 200) and the fastening body (barn door 300). In addition, when the fastening body (barn door 300) falls and causes the rope portion 222 to tighten, the rope portion 222 may swing/rotate to a certain extent, to form a certain buffer, thus preventing the connecting portion 22 made of a completely rigid structure from breaking caused by pulling the connecting portion 22 when the fastening body (barn door 300) falls.

Referring to FIGS. 1 and 2 again, embodiments of the present disclosure further provide a luminaire 1000, including a luminaire body 200, a barn door 300, and the above-mentioned locking structure 1000. The barn door 300 is detachably connected to the luminaire body 200. The barn door 300 is configured to adjust the emission angle of the light emitted by the luminaire body 200, to change the lighting effect of the luminaire 1000. The mounting seat 11 of the snap-fit assembly 10 of the locking structure 100 is connected to the luminaire body 200, and the connecting portion 22 of the connector 20 of the locking structure 100 is connected to the barn door 300.

The luminaire 1000 of the present disclosure has the same beneficial effects as the locking structure 100, which will not be elaborated here.

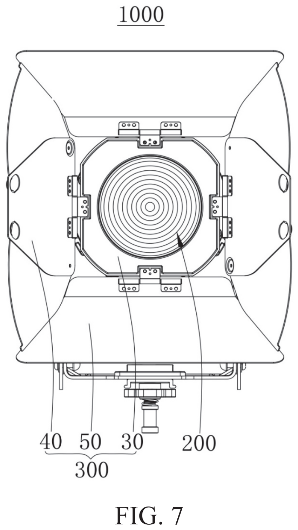

Referring to FIG. 7 together, in some embodiments, the barn door 300 includes a connecting seat 30, two first light-shielding plates 40, and two second light-shielding plates 50. The connecting seat 30 is detachably mounted on the luminaire body 200, and the connecting portion 22 of the connector 20 is connected to the connecting seat 30. The two first light-shielding plates 40 are arranged opposite each other in a horizontal direction and are rotatably connected to the connecting seat 30, respectively. The two second light-shielding plates 50 are arranged opposite each other in a vertical direction and are rotatably connected to the connecting seat 30, respectively. The two first light-shielding plates 40 and the two second light-shielding plates 50 are arranged around a light-emitting side of the luminaire body 200 around the axis of the luminaire body 200. By rotating the two first light-shielding plates 40, the horizontal emission angle of the light emitted by the luminaire body 200 may be adjusted. By rotating the two second light-shielding plates 50, the vertical emission angle of the light emitted by the luminaire body 200 may be adjusted, thereby changing the lighting effect of the luminaire 1000.

The embodiments of the present disclosure have been described in detail above in combination with the accompanying drawings. However, the present disclosure is not limited the above embodiments. Various changes may also be made within the knowledge scope of those having ordinary skills in the art without departing from the purpose of the present disclosure. In addition, the embodiments in the present disclosure and features in the embodiments may be combined with each other without conflict.

## Claims

1. A locking structure (100) for connection between a fastened body and a fastening body, comprising:
a snap-fit assembly (10) comprising a mounting seat (11), a snap-fit member (12), and an elastic reset member (13); wherein the mounting seat (11) defines an accommodating cavity (101) and a first opening (102), the first opening (102) extends through a side wall of the mounting seat (11) in a first direction and is in communication with the accommodating cavity (101), and the mounting seat (11) is configured to connect the fastened body; the snap-fit member (12) is slidably mounted in the accommodating cavity (101) in the first direction, and the snap-fit member (12) is able to slide between a first position and a second position in the first direction; the snap-fit member (12) comprises a snap-fit portion (121), and the snap-fit portion (121) is opposite to the first opening (102) in the first direction; the elastic reset member (13) is connected between the mounting seat (11) and the snap-fit member (12), and the elastic reset member (13) is configured to provide the snap-fit portion (121) with an elastic force against the first opening (102); and
a connector (20) comprising a clamping portion (21) and a connecting portion (22), wherein the clamping portion (21) is connected to the connecting portion (22), and the connecting portion (22) is configured to connect the fastening body;
wherein when the snap-fit member (12) is in the first position, the snap-fit portion (121) is away from the first opening (102), and the clamping portion (21) is able to be inserted into the accommodating cavity (101) through the first opening (102); when the snap-fit member (12) is in the second position, the snap-fit portion (121) is adjacent to the first opening (102) and restricts the clamping portion (21) to separate from the accommodating cavity (101) through the first opening (102).

2. The locking structure (100) according to claim 1, wherein when the snap-fit member (12) is in the first position, a minimum distance between the snap-fit portion (121) and the first opening (102) is greater than or equal to a height of the clamping portion (21); and
when the snap-fit member (12) is in the second position, a minimum distance between the snap-fit portion (121) and the first opening (102) is less than a height of the clamping portion (21).

3. The locking structure (100) according to claim 1 or 2, wherein the mounting seat (11) further defines a second opening (104), the second opening (104) extends through the side wall of the mounting seat (11) in the first direction and is in communication with the accommodating cavity (101), the second opening (104) is connected to the first opening (102), and the second opening (104) extends in a second direction, the second opening (104) is configured to allow the connecting portion (22) to move in the second direction when the snap-fit member (12) is in the first position, to drive the clamping portion (21) to move to one side of the snap-fit portion (121) away from the first opening (102) in the second direction, and the first direction is perpendicular to the second direction.

4. The locking structure (100) according to claim 3, wherein a diameter of the first opening (102) is greater than or equal to a maximum diameter of the clamping portion (21), and a width of the second opening (104) is greater than or equal to a diameter of the connecting portion (22) and less than the maximum diameter of the clamping portion (21).

5. The locking structure (100) according to claim 3 or 4, wherein the snap-fit member (12) is provided with a first guide surface (1201) facing the first opening (102), the first guide surface (1201) extends gradually away from the first opening (102) in a direction from the first opening (102) to the second opening (104), and the first guide surface (1201) is configured to abut against the clamping portion (21) and guide the clamping portion (21) to move to one side of the snap-fit portion (121) away from the first opening (102) in the second direction.

6. The locking structure (100) according to claim 5, wherein the clamping portion (21) is provided with an abutting surface (2101), the abutting surface (2101) is located at one end of the clamping portion (21) away from the connecting portion (22), the abutting surface (2101) extends gradually away from the connecting portion (22) in a direction from the clamping portion (21) to the connecting portion (22), and the abutting surface (2101) is configured to abut against the first guide surface (1201).

7. The locking structure (100) according to any one of claims 3 to 6, wherein the first opening (102) and the second opening (104) are located at a bottom of the mounting seat (11), a second guide surface (1101) is provided on an inner surface of the side wall facing the accommodating cavity (101), the second guide surface (1101) is provided along an edge of the second opening (104), and the second guide surface (1101) extends gradually away from the accommodating cavity (101) in a direction from the second opening (104) to the first opening (102).

8. The locking structure (100) according to any one of claims 1 to 7, wherein the snap-fit assembly (10) further comprises a push-assisting mechanism (14); the push-assisting mechanism (14) is arranged in the accommodating cavity (101), and the push-assisting mechanism (14) is configured to push the clamping portion (21) to the first opening (102) when the snap-fit member (12) is in the first position.

9. The locking structure (100) according to claim 8, wherein the push-assisting mechanism (14) comprises a pushing member (141) and an elastic push-assisting member (142); the pushing member (141) is slidably mounted in the accommodating cavity (101) in the second direction, the elastic push-assisting member (142) is connected between the pushing member (141) and the mounting seat (11), the elastic push-assisting member (142) is configured to provide the pushing member (141) with an elastic force against the clamping portion (21), and the first direction is perpendicular to the second direction.

10. The locking structure (100) according to any one of claims 1 to 9, wherein the snap-fit member (12) further comprises a pressing portion (122), the pressing portion (122) is connected to the snap-fit portion (121);
wherein the mounting seat (11) further defines a third opening (106), the third opening (106) extends through the side wall of the mounting seat (11) in the first direction and is in communication with the accommodating cavity (101), and the pressing portion (122) is inserted through the third opening (106).

11. The locking structure (100) according to any one of claims 1 to 10, wherein the mounting seat (11) further defines a storage cavity (107), the storage cavity (107) is in communication with the accommodating cavity (101), and the storage cavity (107) is located on one side of the snap-fit member (12) facing away from the first opening (102).

12. The locking structure (100) according to any one of claims 1 to 11, wherein the mounting seat (11) comprises a seat body (111) and a cover plate (112); the cover plate (112) is detachably connected to the seat body (111), the seat body (111) and the cover plate (112) cooperatively define the accommodating cavity (101), the accommodating cavity (101) is defined in the seat body (111), and the first opening (102) is defined in the cover plate (112).

13. A luminaire (1000), comprising a luminaire body (200), a barn door (300), and the locking structure (100) according to any one of claims 1 to 12, wherein the barn door (300) is detachably connected to the luminaire body (200), the mounting seat (11) is connected to the luminaire body (200), and the connecting portion (22) is connected to the barn door (300).
